# EUROPÄISCHE PATENTSCHRIFT

(11) **EP 0 874 996 B1**
(45) Veröffentlichungstag und Bekanntmachung des Hinweises auf die Patenterteilung: **27.06.2001**
(21) Anmeldenummer: 97901028.7
(22) Anmeldetag: 15.01.1997
(51) Int. Cl.: G01P 3/487

(54) **MAGNETPOLROTOR FÜR EINE DREHZAHLMESSUNG**
MAGNETIC POLE ROTOR FOR REVOLUTION COUNTING
ROTOR A POLES MAGNETIQUES POUR MESURE DE VITESSE DE ROTATION

(30) Priorität: 16.01.1996 DE 19601271
(43) Veröffentlichungstag der Anmeldung: 04.11.1998
(73) Patentinhaber: Donner, Michael, 58971 Werdohl (DE)
(72) Erfinder: Donner, Michael, 58971 Werdohl (DE)
(74) Vertreter: Hassler, Werner, Dr.
(86) Internationale Anmeldenummer: EP9700152
(87) Internationale Veröffentlichungsnummer: WO9726543

(56) Entgegenhaltungen:
- EP-A- 0 213 732
- DE-A- 3 636 039
- DE-C- 3 805 702

## Beschreibung

### Technisches Gebiet der Erfindung

Die Erfindung betrifft einen Magnetpolrotor mit einer Mehrzahl von in einen Kunststoffring (5) eingebundenen Magnetpolen, wobei der Kunststoffring (5) auf eine Zylinderfläche (2) eines Basisrings (1) aufgepreßt ist und an einer Ringwand (3) des Basisrings (1) anliegt und wobei ein Käfigring (6) den Kunststoffring (5) umgreift

Anwendungsgebiet der Erfindung ist die Drehzahlmessung von Wellen wie Turbinenwellen, Generatorwellen, Maschinenwellen, Antriebswellen und dergleichen. Ein spezielles Anwendungsgebiet ergibt sich in der Kraftfahrzeugtechnik bei Getriebewellen, Tachometerwellen, Kurbelwellen, Nockenwellen, Rädern und dergleichen.

### Stand der Technik

Bekannt ist die Verwendung von zahnradartigen Rotoren. Diese bewirken sehr steile Schaltflanken bei der Abtastung. Infolgedessen können durch Drehschwingungen der Welle Schaltimpulse erzeugt und eine Drehzahl vorgetäuscht werden. Derartige Fehlimpulse führen zur Erkennung undefinierter Fahrzustände, die zu einer Abschaltung der Steuerung führen, so daß das Kraftfahrzeug nicht mehr betriebsbereit ist und abgeschleppt werden muß.

Aus der DE 36 36039 A1 sind Magnetpolräder aus einem kunststoffgebundenen Magnetwerkstoff bekannt, die eine gewünschte Polzahl aufweisen. Diese Magnetpolräder haben ein weicheres Schaltverhalten, so daß die genannten Drehschwingungen nicht zu Fehlmessungen führen können. Da jedoch die Festigkeit des Kunststoffs bei hohen Betriebstemperaturen von 200 °C nachläßt, kann sich das Magnetpolrad bei hohen Drehzahlen von einigen tausend Umdrehungen pro Minute gegenüber der Welle in Umfangsrichtung verschieben, so daß keine genaue Messung der Drehzahl mehr möglich ist.

Ein Magnetpolrotor der gattungsgemäßen Art ist aus der EP 0 213732 A bekannt. Der Magnetpolrotor ist durch einen nichtmagnetischen Metallring verstärkt. Dadurch wird der Magnetpolrotor nicht ausreichend gegen ein Verschieben oder Rutschen in Umfangsrichtung auf dem Basisiring gesichert.

### Zusammenfassung der Erfindung

Aufgabe der Erfindung ist eine solche Ausbildung des Magnetpolrotors, daß auch bei hohen Betriebstemperaturen eine drehfeste Verbindung mit der Welle gesichert bleibt.

Diese Aufgabe wird nach der Erfindung dadurch gelöst, daß der Käfigring (6) ein L-förmiges Profil bestehend aus einem radial äußeren Ringmantel (9) und einer radialen Ringwand (8), sowie einen am radial inneren Ende der Ringwand (8) anschließenden radial inneren Ringmantel (7) aufweist, der auf den Basisring (1) aufgepreßt und drehfest mit diesem verbunden ist, wobei der radial äußere Ringmantel(9) am Kunststoffring(5) fest anliegt und dessen äußere Mantelfläche vollständig überdeckt, so daß der Kunststoffring (5) ebenfalls drehfest mit dem Basisring (1) verbunden ist.

Die Erfindung unterscheidet sich insofern vom Stand der Technik, als einerseits der Kunststoffring durch den Käfigring fest auf den Basisring aufgepreßt ist, und andererseits auch der Käfigring durch den Ringmantel fest mit dem Basisring verbunden ist, so daß er sich bei Nachlassen der Festigkeit des Kunststoffwerkstoffes infolge hoher Temperaturen auch bei hohen Drehzahlen nicht in Umfangsrichtung auf der Welle verschieben kann. Es ist also eine exakte Drehzahlmessung gewährleistet.

Eine Verbesserung des Preßsitzes wird dadurch erreicht, daß die Zylinderfläche eine Profilierung nach Art einer Rändelung aufweist.

Eine genaue Ausrichtung des Kunststoffrings auf dem Basisring wird dadurch sichergestellt, daß der Kunststoffring in axialer Richtung an einer Ringwand des Basisrings anliegt.

Die Polzahl des Magnetpolrotors wird entsprechend der geforderten Meßgenauigkeit gewählt. Die Polzahl kann weitgehend beliebig sein.

### Kurzbeschreibung der Zeichnung

Ein Ausführungsbeispiel wird unter Bezugnahme auf die Zeichnung erläutert, in der darstellen:

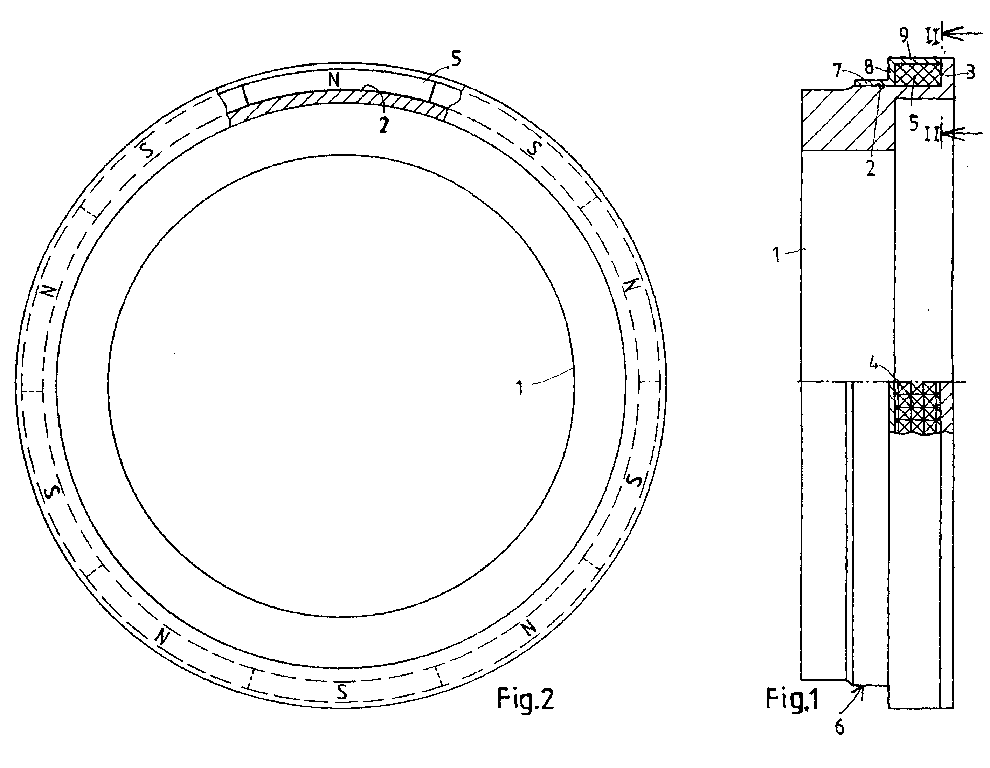

Fig. 1 eine teilgeschnittene Ansicht des Magnetpolrotors und
Fig. 2 eine Ansicht in axialer Richtung.

### Ausführungsbeispiel

Der Magnetpolrotor umfaßt einen Basisring 1 aus Stahl, Keramik oder Verbundwerkstoff, der auf einer Welle, deren Drehzahl zu messen ist, in axialer Richtung festgespannt werden und dabei die hohe Spannkraft aufnehmen kann. Die Welle kann die Getriebwelle eines Kraftfahrzeugs sein. Der Basisring 1 weist eine äußere Zylinderfläche 2 auf, an die eine nach außen gerichtete Ringwand 3 anschließt. Die Zylinderfläche 2 ist mit einer Profilierung 4 nach Art einer Rändelung versehen.

Ein Kunststoffring 5 enthält eingebettete Magnetpole, deren Orientierung N, S in Fig, 2 angegeben ist. Es kann sich um in einen Ringverbund eingefügte Magnetteile handeln. Häufig sind jedoch rartige Kunststoffringe 5 Spritzgußteile. Die Magnetopole sind in der gewünschten Weise polarisiert. Der Kunststoffring 5 ist auf die Zylinderfläche 2 aufgepreßt, wobei die Rändelung 4 eine sicheren Halt gewährleistet. Bei höheren Temperaturen leidet die Festigkeit des Kunststoffwerkstoffs. Bei hohen Drehzahlen von einigen tausend Umdrehungen pro Minute. muß daher vermieden werden, daß sich der Kunststoffring 5 auf der Zylinderfläche 2 in Umfangsrichtung verschiebt, so daß die Drehzahlmessung fehlerhaft wird.

Ein Käfigring 6 sichert den Kunststoffring 5. Der Käfigring 6 umfaßt von Innenrand ausgehend einen Ringmantel 7, eine radiale Ringwand 8 und einen Ringmantel 9. Die Ringwand 8 und der Ringmantel 9 bilden ein L-förmiges Profil. Der Käfigring 6 ist auf den Basisring 1 aufgepreßt und hält so den Kunststoffring 5 fest, so daß derselbe mit dem Basisring 1 immer drehfest verbunden ist.

## Patentansprüche

1. Magnetpolrotor mit einer Mehrzahl von in einen Kunststoffring (5) eingebundenen Magnetpolen, wobei der Kunststoffring (5) auf eine Zylinderfläche (2) eines Basisrings (1) aufgepreßt ist und an einer Ringwand (3) des Basisrings (1) anliegt und wobei ein Käfigring (6) den Kunststoffring (5) umgreift, dadurch gekennzeichnet, daß der Käfigring (6) ein L-förmiges Profil bestehend aus einem radial äußeren Ringmantel (9) und einer radialen Ringwand (8), sowie einen am radial inneren Ende der Ringwand (8) anschließenden radial inneren Ringmantel (7) aufweist, der auf den Basisring (1) aufgepreßt und drehfest mit diesem verbunden ist, wobei der radial äußere Ringmantel(9) am Kunststoffring(5) fest anliegt und dessen äußere Mantelfläche vollständig überdeckt, so daß der Kunststoffring (5) ebenfalls drehfest mit dem Basisring (1) verbunden ist.

2. Magnetpolrotor nach Anspruch 1, dadurch gekennzeichnet, daß die Zylinderfläche (2) eine Profilierung (4) nach Art einer Rändelung aufweist.

3. Magnetpolrotor nach Anspruch 1 oder 2, dadurch gekennzeichnet, daß der Kunststoffring (5) in axialer Richtung an einer Ringwand (3) des Basisrings (1) anliegt.

## Claims

1. A magnetic pole rotor having a plurality of magnetic poles which are embedded in a plastics ring (5) whereby the plastics ring (5) is pressed onto a cylindrical surface (2) of a base ring (1), and abuts against an annular wall (3) of the base ring (1), and whereby a cage ring (6) covers the plastics ring (5), characterized in that the cage ring (6) has an L-shaped profile consisting of a radial outer annular sheathing (9), and a radial annular wall (8) and a radial inner annular sheathing (7) joining to the radial inner end of the annular wall (8), said inner radial sheathing (7) is pressed on the base ring (1) and connected non-rotationally with the base ring (1), whereby the radial outer annular sheathing (9) abuts firmly against the plastics ring (5) and covers entirely the outer surface of the same, so that the plastics ring (5) is also connected non-rotationally with the base ring (5).

2. A magnetic pole rotor according to claim 1, characterized in that the cylindrical surface (2) has a knurl-type profile.

3. A magnetic pole rotor according to claim 1 or 2, characterized in that the plastics ring (5) abuts in the axial direction on a annular wall (3) of the base ring (1).

## Revendications

1. Rotor à pôles magnétiques comprenant une pluralité de pôles magnétiques intégrés dans une bague plastique (5), la bague plastique (5) étant emmanchée sur une surface cylindrique (2) d'un anneau de base (1) et s'appuyant contre une paroi annulaire (3) de l'anneau de base (1), et dans lequel un anneau à cage (6) entoure la bague plastique (5), caractérisé en ce que l'anneau à cage (6) présente un profil en forme de L constitué d'une enveloppe annulaire radialement externe (9) et d'une paroi annulaire radiale (8), ainsi qu'une enveloppe annulaire radialement interne (7) se raccordant à l'extrémité radialement interne de la paroi annulaire (8), laquelle enveloppe annulaire (7) est emmanchée sur l'anneau de base (1) et est connectée fixe en rotation à celui-ci, l'enveloppe annulaire radialement externe (9) s'appuyant fixement contre la bague plastique (5) et recouvrant complètement la surface périphérique extérieure de celle-ci, de sorte que la bague plastique (5) soit également connectée fixe en rotation à l'anneau de base (1).

2. Rotor à pôles magnétiques selon la revendication 1, caractérisé en ce que la surface cylindrique (2) présente un profilage (4) de type moletage.

3. Rotor à pôles magnétiques selon la revendication 1 ou 2, caractérisé en ce que la bague plastique (5) s'appuie dans la direction axiale contre une paroi annulaire (3) de l'anneau de base (1).
